## Europäisches Patentamt
## European Patent Office
## Office européen des brevets

(19)

(11) Numéro de publication: **0 246 138 B1**

(12) # FASCICULE DE BREVET EUROPEEN

(45) Date de publication du fascicule du brevet:
07.11.90

(51) Int. Cl.⁵: **G01C 17/30**

(21) Numéro de dépôt: **87401006.9**

(22) Date de dépôt: **30.04.87**

---

(54) **Boussole faiblement magnétique.**

---

(30) Priorité: **13.05.86 FR 8606858**

(43) Date de publication de la demande:
**19.11.87 Bulletin 87/47**

(45) Mention de la délivrance du brevet:
**07.11.90 Bulletin 90/45**

(84) Etats contractants désignés:
**DE GB IT**

(56) Documents cités:
**GB-A- 2 107 057**
**US-A- 4 037 328**
**US-A- 4 255 866**

(73) Titulaire: **THOMSON-CSF, 51, Esplanade du Général de Gaulle, F-92800 Puteaux(FR)**

(72) Inventeur: **Posseme, Gilles, THOMSON-CSF SCPI 19, avenue de Messine, F-75008 Paris(FR)**

(74) Mandataire: **Desperrier, Jean-Louis et al, THOMSON-CSF SCPI, F-92045 PARIS LA DEFENSE CEDEX 67(FR)**

---

ACTORUM AG

## Description

La présente invention se rapporte aux boussoles qui permettent de repérer une direction par rapport au Nord magnétique tout en perturbant le plus faiblement possible le champ magnétique local à proximité de cette boussole.

Il est connu pour déterminer une direction par rapport au Nord magnétique d'utiliser une boussole de type classique comportant un petit aimant monté sur une pointe. Un cadran gradué appelé rose fixé à l'aimant permet de repérer la direction choisie en fonction des graduations qu'il porte.

Bien que la perturbation du champ magnétique local apportée par un tel appareil soit faible, elle est néanmoins gênante dans un certain nombre de cas. C'est ainsi qu'elle est parfaitement capable d'actionner le dispositif de mise à feu d'une mine magnétique. Or les plongeurs sous-marins sont amenés à utiliser de telles boussoles pour se repérer sous la surface des eaux, et ils risquent donc de provoquer accidentellement la mise à feu d'une telle mine magnétique, particulièrement lorsqu'ils sont chargés de procéder aux déminages.

Il est connu du brevet US 4 255 866 de fabriquer une boussole pour l'usage sous-marin en utilisant des capteurs à effet Hall. Ces capteurs sont montés sur une rose orientable par rapport à un corps et lorsque le corps est dirigé dans la direction affichée sur la rose, un voyant de bonne direction s'allume. Quand le corps se désoriente, un voyant parmi deux autres s'allume pour indiquer d'aller à droite ou à gauche. Ce dispositif laisse subsister un magnétisme dû aux capteurs, qu'il convient de compenser par des moyens appropriés. D'autre part, le courant d'excitation d'un capteur est d'environ 0,1 A, et un tel courant génère lui-même un champ magnétique relativement important. Enfin, les moyens de réalisation décrits ne permettent pas une manipulation aisée par un plongeur, et sont a priori difficilement immersibles.

On sait par ailleurs utiliser des compas magnétiques terrestres, connus sous le terme anglo-saxon de "flux-gate", qui comprennent une sonde munie d'un noyau saturable situé à l'intérieur d'une bobine d'excitation. Le champ magnétique continu terrestre, superposé au champ d'excitation induit par la bobine, entraîne un déséquilibre dans le courant électrique qui produit ce champ d'excitation. La mesure de ce déséquilibre permet de déterminer l'orientation et la valeur de ce champ continu terrestre.

Il est connu du brevet US 4 037 328 de fabriquer un dispositif d'orientation pour plongeur sous-marin, comprenant un capteur à effet Hall placé dans un dispositif remorqué derrière le dos du plongeur. L'indicateur de direction est formé de deux transducteurs sonores placés sur les tempes du plongeur. Ce dispositif n'est manifestement pas étudié pour minimiser le champ magnétique perturbateur qu'il est susceptible d'engendrer, tant par ses organes que par l'énergie électrique qu'il consomme. Par ailleurs, les transducteurs sonores osseux utilisent à priori une bobine et un aimant largement susceptibles de déclencher l'explosion d'une mine magnétique.

L'invention repose sur la découverte inattendue que la perturbation du champ local créée par un tel magnétomètre est très largement plus faible que celle créée par l'aimant d'une boussole. Si l'on élimine dans la construction de ce magnétomètre tous les matériaux ferro-magnétiques, à part les noyaux des sondes, et que l'on utilise des circuits électriques à faible consommation, on arrive facilement à avoir une perturbation 100 à 1000 fois plus faible que celle produite par un compas magnétique classique comportant un petit aimant.

La boussole selon l'invention comprend donc au moins un magnétomètre du type "flux-gate" et des circuits électroniques à faible consommation permettant d'alimenter ce magnétomètre et d'allumer, selon les indications qu'il donne, des voyants lumineux indiquant la direction souhaitée.

D'autres particularités et avantages de l'invention apparaîtront clairement dans la description suivante faite en regard des figures annexées qui représentent:

- la figure 1: une vue en coupe d'une boussole selon l'invention;
- la figure 2: un schéma des circuits électroniques de cette boussole;
- la figure 3: un diagramme des signaux dans ces circuits électroniques;
- la figure 4: une vue du cadran indicateur formant la rose de ladite boussole.

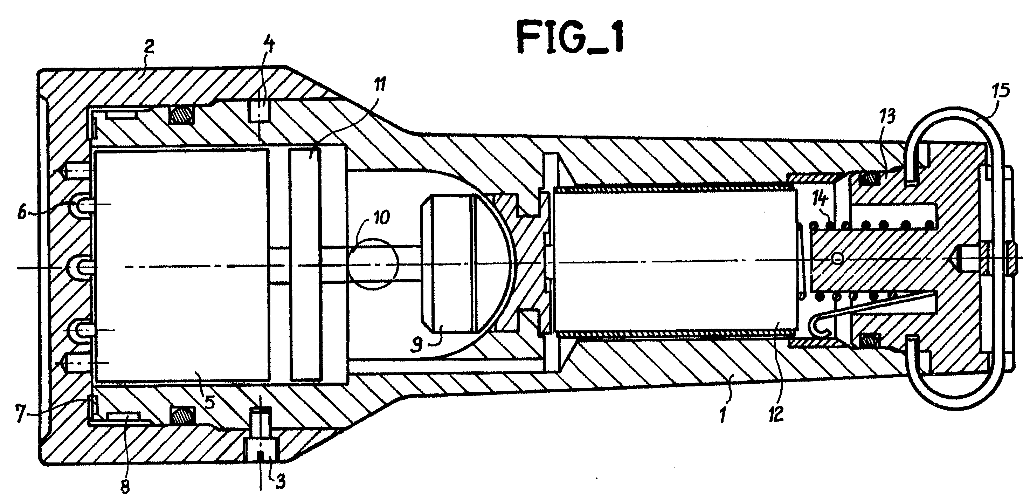

La boussole représentée en coupe partielle sur la figure 1 comprend un corps 1 dont la forme extérieure est assez semblable à celle d'une lampe torche. Une bague mobile 2 est fixée sur la tête de ce corps. Elle peut tourner autour de l'axe longitudinal du corps tout en restant solidaire de celui-ci grâce à une vis 3 venant se loger dans une saignée circulaire 4. Elle entraîne dans sa rotation un ensemble électronique 5 placé dans l'intérieur creux du corps 1. Cet ensemble alimente des voyants tels que 6 qui sont visibles par la face supérieure de la bague. Pour cela cette bague est réalisée en matière transparente, permettant donc de voir les voyants ainsi que deux roses, l'une supérieure 7 et l'autre latérale 8, qui sont gravées sur le corps 1. Des index non représentés sur la figure 1 viennent repérer la position de la bague par rapport aux roses.

Un pendule 9 dont le lest inférieur hémisphérique est situé dans la cavité interne du corps 1. Le fond de cette cavité est également de forme hémisphérique, de manière à ce que le pendule y coulisse à frottement doux en étant éventuellement amorti par un liquide visqueux. Un joint de cardan 10 permet à ce pendule d'osciller de manière à rester vertical lorsque l'orientation de l'axe longitudinal du corps de la boussole dévie de la verticale locale, tout au moins dans certaines limites. Il suffit donc au plongeur de maintenir grossièrement la boussole la tête vers le haut pour que le pendule reste vertical. Le joint de cardan 10 relie le pendule au corps en permettant donc ces oscillations, mais en interdisant un mouvement de rotation du pendule par rapport au corps selon l'axe longitudinal du corps.

Le pendule comporte dans sa partie supérieure deux sondes de magnétomètre du type "flux-gate" disposées en quadrature l'une par rapport à l'autre et perpendi-culairement à l'axe longitudinal du corps lorsque celui-ci est confondu avec l'axe du pendule. L'action du pendule permet donc de maintenir ces deux sondes dans un plan horizontal en dépit du mouvement de la boussole et ceci dans les limites précisées plus haut.

Un joint tournant 11 permet d'alimenter les sondes portées par le pendule à partir des circuits électroniques 5 quelle que soit la rotation de la bague 2 par rapport au corps 1. Les conducteurs d'alimentation sont par exemple des fils souples qui passent au travers du cardan 10 sans limiter le débattement du pendule.

L'extrémité inférieure du corps est également creuse et contient une pile 12 chargée d'alimenter les circuits électroniques 5 par l'intermédiaire de conducteurs, non représentés sur la figure, qui viennent aboutir au joint tournant 11. Cette pile est maintenue en place par un bouchon tournant 13 qui ferme l'extrémité inférieure du corps et qui sert d'interrupteur pour la mise en route de la boussole. Cet interrupteur tournant comporte de manière connue un certain nombre de pièces telles que des ressorts 14 et 15 dont on a pris soin de les réaliser, ainsi que toutes les autres pièces de l'appareil, en matériaux non ferro-magnétiques tels que du plastique et du bronze phosphoreux pour les ressorts par exemple.

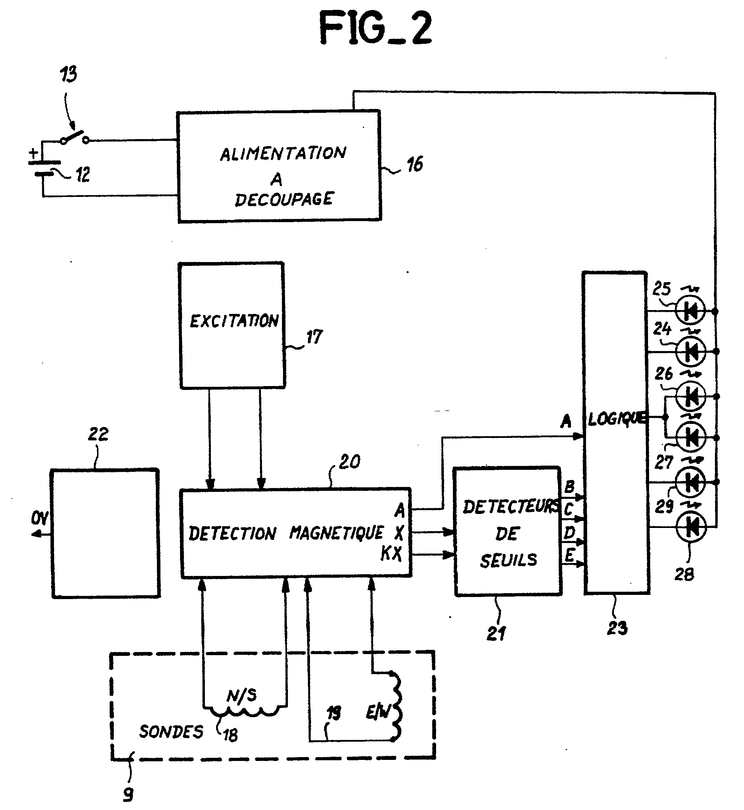

Les circuits électroniques 5 comprennent, comme représenté sur la figure 2, un certain nombre de modules.

Une alimentation à découpage 16 permet, à partir de la pile 12 et par l'intermédiaire du bouchon interrupteur 13, de fournir les différentes tensions d'alimentation nécessaires aux circuits élecroniques. Les connexions d'alimentation n'ont pas été représentées sur la figure.

Un générateur de courant d'excitation, essentiellement formé d'un oscillateur, fournit le courant électrique alternatif nécessaire pour alimenter les deux sondes nord-sud 18 et est-ouest 19 portées par le pendule 9.

Ce courant alternatif est fourni par l'intermédiaire d'un circuit de détection magnétique 20 qui permet, selon une technique connue, de détecter la dissymétrie introduite par le champ magnétique terrestre dans les courants parcourant les sondes et de délivrer des signaux mesurant cette dissymétrie.

Pour minimiser la consommation de courant, préjudiciable à la durée de la pile mais surtout amenant par induction électromagnétique une perturbation du champ local, on a utilisé un système de traitement logique.

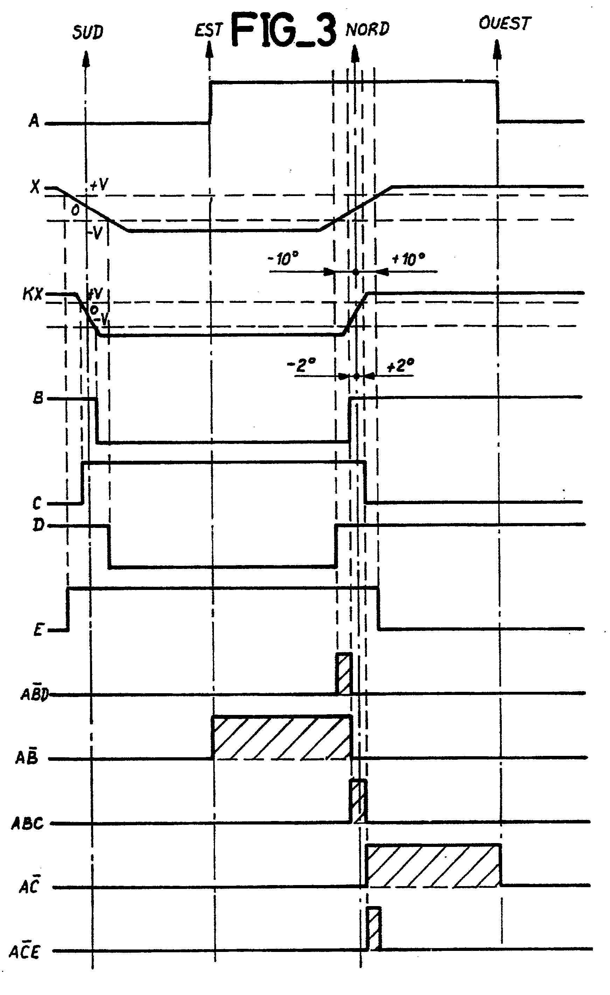

Pour cela les signaux de la sonde nord-sud sont détectés en boucle ouverte de façon à ce que la tension de sortie ne puisse prendre que deux niveaux, un niveau haut lorsqu'elle est orientée dans le demi-cadran nord et un niveau bas lorsqu'elle est orientée dans le demi-cadran sud. La transition entre ces niveaux se fait au passage par la direction est-ouest. On obtient ainsi un signal logique binaire A représenté sur la ligne 1 de la figure 3.

Les signaux de la sonde est-ouest sont par contre traités en boucle fermée, selon une technique elle aussi connue. Pour cela un système de contre-réaction fait circular dans la bobine d'excitation un courant continu, qui crée un champ lui-même continu qui tend à annuler l'effet du champ terrestre. Ce dispositif, qui fonctionne selon une méthode de 0, délivre une tension de sortie X dont les variations sont représentées sur la deuxième ligne de la figure 3. Le système sature assez rapidement dès que le champ mesuré dépasse une certaine valeur, et donc dans deux plages assez importantes entourant la direction est-ouest la tension se stabilise à un niveau haut ou à un niveau bas selon l'orientation de la sonde à l'intérieur de ces deux plages. Lorsqu'on sort de ces plages, la tension varie sensiblement proportionellement à l'orientation, en passant par 0 pour une orientation nord-sud. Un amplificateur permet de multiplier cette tension X par un coefficient K supérieur à 1, de manière à élargir les plages de saturation et surtout à obtenir une pente plus raide de la variation du signal autour de la direction nord-sud. Ce signal K X est représenté sur la troisième ligne de la figure 3.

Ces signaux X et KX sont appliqués à des circuits de détection de seuil 21 qui permettent d'obtenir des signaux logiques binaires B, C, D et E qui basculent entre un niveau haut et un niveau bas lorsque les signaux X et KX franchissent des niveaux de tension + V et -V. Ces niveaux de tension sont repérés par rapport à une masse fictive 0 obtenue à l'aide d'un générateur 22 qui détermine une masse fictive située à la valeur moitié de la tension d'alimentation fournie par l'alimentation 16. Ces tensions + V et - V sont déterminées de telle manière que le basculement des détecteurs pour le signal X se produise lorsque le dépointage de la sonde est-ouest par rapport à la direction nord-sud atteint une valeur de + ou - 10°. Le coefficient multiplicateur K est lui choisi pour que le signal KX franchisse ces limites de tension + V et -V pour des dépointages égaux à + 2° ou -2°.

Les signaux B, C, D et E correspondant respectivement à - 2°, +2°,-10°,+ 10° de dépointage sont représentés sur les lignes 4 à 7 de la figure 3.

Ces signaux logiques A à E sont alors appliqués à un ensemble de circuits logiques 23 qui réalisent les combinaisons suivantes, représentées sur les lignes 8 à 12 de la figure 3:

-A$\overline{B}$D, qui est à un niveau haut pour un dépointage compris entre -10° et -2°;

-A$\overline{B}$, qui est à un niveau haut pour un dépointage compris entre -90° et - 2°;

-ABC, qui est à un niveau haut pour un dépointage compris entre - 2° et + 2°,

-A$\overline{C}$, qui est à un niveau haut pour un dépointage compris entre + 2° et + 90°;

-A$\overline{C}$E, qui est à un niveau haut pour un dépointage pris entre + 2° et + 10°.

On remarque que ce dépointage est repéré par rapport à la direction sud-nord de la bobine dite est-ouest, la bobine dite nord-sud étant alors dans la direction est-ouest. On utilise cette convention de manière à avoir dans la direction déterminée un signal minimum dans les bobines, pour obtenir un maximum de sensibilité.

Les circuits logiques 23 permettent d'alimenter un ensemble de diodes électroluminescentes 24 à 28 qui s'allument lorsque les signaux de sortie de ces circuits sont à un niveau haut et permettent d'indiquer le sens et l'ordre de grandeur du dépointage, ainsi que le pointage correct.

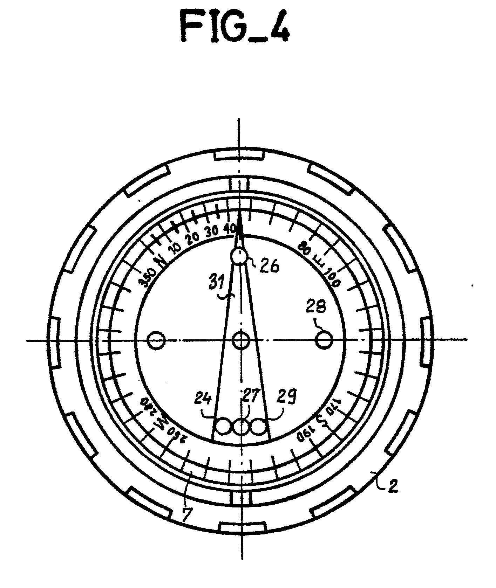

Ces diodes électroluminescentes sont vues sur la figure 4 par transparence à travers la bague 2, qui laisse également apparaître la rose 7.

Les couleurs des diodes sont données à titre d'exemple. Elles sont plus particulièrement adaptées pour indiquer la direction à suivre de manière ergonomique à l'utilisateur.

La bague 2 comporte gravée une aiguille de direction 31 en forme de flèche, qui tourne donc en même temps que la bague, dont la pointe peut être amenée sur la graduation da la rose représentant par exemple la route à suivre.

Dans ces conditions si l'aiguille est dirigée dans la direction choisie avec une erreur n'excédant pas + ou - 2°, les diodes jaunes 26 et 27 situées aux deux extrémités de l'aiguille 31 vont s'éclairer, indiquant que la direction est la bonne.

Dès que le dépointage franchit cette limite de 2°, les deux diodes jaunes 26 et 27 s'éteignent et les diodes vertes 24 et 25, alimentées respectivement par les signaux A $\overline{B}$ D et A $\overline{B}$, ou les diodes rouges 29 et 28, alimentées respectivement par les signaux A $\overline{C}$ B et A $\overline{C}$, s'allument, indiquant que l'on s'écarte de la route choisie respectivement à droite ou à gauche.

En effet les diodes 24 et 29 sont situées à droite et à gauche de la diode 27 dans la base de l'aiguille 31, et les diodes 25 et 28 sont situées sur le diamètre de la bague perpendiculaire à la direction de l'aiguille, au niveau de la rose.

Tant que le dépointage reste compris entre 2 et 10°, ces deux diodes rouges ou ces deux diodes vertes restent allumées.

Si le dépointage s'accentue, lorsqu'il vient à dépasser 10° celle des diodes 24 ou 27 qui est allumèe s'éteint, ne laissant plus allumée que la diode 25 ou la diode 28.

Les dispositions et la couleur de ces diodes sont telles qu'elles indiquent facilement le changement de direction à prendre pour corriger le dépointage.

Ainsi lorsque les diodes rouges s'allument il faut tourner à gauche, et lorsque les diodes vertes s'allument il faut tourner à droite.

En corrigeant donc la direction on voit successivement la deuxième diode de dépointage s'allumer, puis les deux diodes de dépointage s'éteindre, et enfin les deux diodes de bonne direction s'allumer.

Comme dans tout boussole, on peut utiliser celle-ci selon deux modes distincts, soit pour suivre une direction donnée en affichant celle-ci sur la rose et en maintenant l'allumage des diodes 26 et 27, soit pour repérer l'azimut d'un objectif visible en pointant celui-ci par l'aiguille et en tournant le corps de la boussole jusqu'à l'allumage de ces deux mêmes diodes.

En réalisant une telle boussole avec des matériaux amagnétiques, on a pu réduire la consommation des circuits électroniques jusqu'à 85 mW et obtenir une perturbation du plan local de 100 à 1000 fois inférieure à celle d'une boussole magnétique ordinaire.

La perturbation est si faible qu'elle est difficilement mesurable, ce qui explique l'écart considérable entre ces chiffres 100 et 1000.

## Revendications

1. Boussole faiblement magnétique, notamment pour plongeurs sous-marins, du type comprenant un corps, des moyens de détection du champ magnétique terrestre montés de manière orientable sur ce corps, une graduation pour repérer l'orientation de ces moyens par rapport au corps, un ensemble électronique (5) pour alimenter ces moyens, et un ensemble de diodes électroluminescentes (24–28) alimenté par l'ensemble électronique pour indiquer la direction à suivre en fonction de l'orientation du corps et des moyens de détection, caractérisé en ce que le corps (1) est allongé et creux pour être destiné à être tenu sensiblement verticalement à la main, que la graduation a la forme d'une rose (7) placée à l'extrémité supérieure du corps, que les moyens de détection comprennent deux magnétomètres du type "flux-gate" (18, 19) croisés, et qu'il comprend en outre une bague (2) transparente et tournante coiffant ladite extrémité supérieure et permettant de voir la rose, et un pendule (9) situé dans le creux du corps et monté sur un cardan (10) supportant les magnétomètres pour les maintenir sensiblement horizontaux en dépit des mouvements du corps; cette boussole étant entièrement réalisée en matériaux amagnétiques, et les circuits électroniques fonctionnant à faible niveau de puissance.

2. Boussole selon la revendication 1, caractérisée en ce que l'un des magnétomètres (18) fonctionne en boucle ouverte pour délivrer un signal logique binaire à deux état distincts en fonction de l'orientation du magnétomètre, le basculement d'un état sur l'autre se faisant au passage par la direction est-ouest, et l'autre magnétomètre (19) fonctionne en boucle fermée pour délivrer un premier signal X qui varie sensiblement linéairement en fonction du dépointage de ce magnétomètre autour de la direction est-ouest en passant d'un premier niveau de saturation à un deuxième niveau de saturation.

3. Boussole selon la revendication 2, caractérisée en ce que le deuxième magnétomètre (19) délivre également un signal K X, où K est un facteur multiplicateur plus grand que 1, ce signal étant semblable au signal X, mais ayant dans sa plage de variation entre les deux niveaux de saturation une pente plus importante.

4. Boussole selon l'une quelconque des revendications 2 et 3, caractérisée en ce que l'un au moins des signaux X et KX est appliqué à un dispositif de détection de seuil (21) qui le compare à deux seuils de tension compris entre les paliers de saturation et délivre des signaux logiques binaires qui changent d'état lors du franchissement de ces seuils par le signal X ou K X, la valeur de ces seuils étant fixée pour correspondre à un dépointage déterminé de la direction ainsi indiquée par la boussole par rapport à la valeur choisie.

5. Boussole selon la revendication 4, caractérisée en ce que les signaux logiques binaires sont appliqués à un ensemble logique (23) qui les combine pour délivrer les signaux de commande desdites diodes électroluminescentes (24-28).

6. Boussole selon la revendication 5, caractérisée en ce que la bague (2) comporte une aiguille (31) gravée en forme de flèche, dont la pointe vient balayer la graduation de la rose (7), une première diode (26) étant fixée à la pointe de la flèche et une deuxième diode (27) à la base de cell-ci, cette première et cette deuxième diode s'éclairant simultanément lorsque la flèche est dans la direction choisie à l'intérieur d'une première plage déterminée, une troisième (24) et une quatrième (29) diodes étant fixées à la base de la flèche de part et d'autre de la deuxième diode, ces troisième et quatrième diodes s'éclairant lorsque la flèche est dépointée à l'extérieur de la première plage tout en restant à l'intérieur d'une deuxième plage déterminée, le sens du dépointage étant determiné par l'éclairement d'une seule de ces diodes à la fois, et une cinquième (25) et une sixième (28) diodes étant fixées au niveau de la rose sur un diamètre perpendiculaire à la flèche, les troisièmes, quatrièmes, cinquième et sixième diodes s'éclairant lorsque le dépointage dépasse la deuxième plage déterminées, seules les deux de ces diodes situées du même côté de la flèche étant allumées simultanément pour indiquer le sens du dépointage.

7. Boussole selon la revendication 6, caractérisée en ce que la première plage est de + ou - 2° et la deuxième plage de + ou- 10°.

## Claims

1. A weakly magnetic compass, particularly suited for submarin divers, of the type comprising a housing, means for detecting the terrestrial magnetic field mounted on the housing so as to be orientable thereon, a graduation for defining the orientation of said means relative to the housing, an electronic assembly (5) for supplying said means, and an assembly of electroluminescent diodes (24 - 28) supplied by the electronic assembly adapted to indicate the direction to be followed as a function of the orientation of the housing and of the detection means, characterized in that the housing (1) is elongated and hollow and is intended to be held by hand substantially vertically, that the graduation has the shape of a rose (7) placed at the upper end of the housing, that the detection means comprise two crossed magnetometers (18, 19) of the fluxgate type, and that it further comprises a transparent and rotatable ring which covers said upper end and allows the rose to be observed, and a pendulum (9) located in the hollow housing and mounted on a cardan joint (10) supporting the magnetometers so as to keep them substantially horizontally in spite of movements of the housing, said compass being made entirely of non-magnetic materials and the electronic circuits operating at a low power level.

2. A compass according to claim 1, characterized in that one of the magnetometers (18) operates in the open loop made so as to deliver a binary logic signal as a function of the orientation of the magnetometer, the switching of the signal from one state to the other taking place when passing east-west direction, and that the other magnetometer (19) operates in the closed loop mode so as to deliver a first signal X, which varies substantially linearly as a function of the misorientation of this magnetometer with respect to the east-west direction in passing from a first level of saturation to a second level of saturation.

3. A compass according to claim 2, characterized in that the second magnetometer (19) delivers also a signal KX, wherein K is a multiplication factor greater than unity, which signal resembles to the signal X, but has a steeper slope in its range of variation comprised between the two levels of saturation.

4. A compass according to anyone of the claims 2 to 3, characterized in that at least one of the two signals X and KX is applied to a threshold detection device (21), which compares it to two voltage levels comprised between the saturation levels and delivers binary logic signals which change when the signal X or KX pass said thresholds, with the value of these thresholds being fixed so as to correspond to a predetermined misorientation of the direction thus indicated by the compass relative to the chosen value.

5. A compass according to claim 4, characterized in that the binary logic signals are applied to a logic assembly (23) adapted to combine them so as to deliver the control signals for said electroluminescent diodes (24 - 28).

6. A compass according to claim 5, characterized in that the ring (2) comprises a pointer (31) engraved in the form of an arrow, whose tip sweeps along the graduation of the rose (7) , with a first diode (26) being fixed to the tip of the arrow and a second diode (27) being fixed to the rear end of it, said first and said second diodes being lightened simultaneously when the arrow is oriented in the chosen direction inside a first predeterminated range, with a third (24) and a fourth diode (29) being fixed to the rear end of the arrow on either side of the second diode, these third and fourth diodes being lightened when the arrow is misoriented outside the first range while still remaining inside a second predetermined range, the direction of the misorientation being determined by the lightening of one of said diodes at a time, and with a fifth (25) and a sixth diode (28) being fixed level with the rose on a diameter perpendicular to the arrow, the third, fourth, fifth and sixth diodes being lightened when the misorientation passes beyond the second predetermined range while only those two of these diodes located on the same side of the arrow being lightened simultaneously so as to indicate the direction of misorientation.

7. A compass according to claim 6, characterized in that the first range comprises plus or minus 2° and the second range comprises plus or minus 10°.

## Patentansprüche

1. Schwach magnetischer Kompaß, insbesondere für Taucher, mit einem Gehäuse, mit Mitteln zur Erfassung des magnetischen Erdfeldes, die ausrichtbar auf dem Gehäuse montiert sind, mit einer Skala zur Ermittlung der Ausrichtung dieser Mittel in Bezug auf das Gehäuse, mit einer elektronischen Einheit (5) zur Versorgung dieser Mittel und mit einer Gruppe von Lumineszenzdioden (24 - 28), die von der elektronischen Einheit gespeist werden und zur Anzeige der zu verfolgenden Richtung abhängig von der Ausrichtung des Gehäuses und den Erfassungsmitteln dient, dadurch gekennzeichnet, daß das Gehäuse (1) länglich und hohl ist und zum im wesentlichen senkrechten Halten mit der Hand bestimmt ist, daß die Skala die Gestalt einer Rose (7) besitzt, die am oberen Ende des Gehäuses angeordnet ist, daß die Erfassungsmittel zwei gekreuzte Magnetometer (18, 19) vom "Fluxgate"-Typ aufweist, und daß das Gehäuse weiter einen durchsichtigen und drehbaren Ring (2), der das obere Ende des Gehäuses bedeckt und die Betrachtung der Rose erlaubt, sowie ein Pendel (9) aufweist, das im Hohlraum des Gehäuses und an einem Kardangelenk (10) befestigt ist und welches die Magnetometer so hält, daß sie trotz der Gehäusebewegungen im wesentlichen waagrecht gehalten werden, wobei der Kompaß ganz aus nichtmagnetischem Material hergestellt ist und die elektronischen Schaltungen auf einem niedrigen Leistungsniveaus arbeiten.

2. Kompaß nach Anspruch 1, dadurch gekennzeichnet, daß eines der Magnetometer (18) in offener Schleife arbeitet und ein logisches Binärsignal entsprechend der Ausrichtung des Magnetometers liefert, wobei das Umkippen von einem Signalzustand in den anderen beim Durchgang durch die Ost-West-Richtung erfolgt, während das andere Magnetometer (19) in geschlossener Schleife arbeitet und ein Signal X liefert, das sich im wesentlichen linear in Abhängigkeit von der Fehlorientierung dieses Magnetometers in Bezug auf die Ost-West-Richtung verändert, wobei es von einem ersten Sättigungspegel in einen zweiten Sättigungspegel übergeht.

3. Kompaß nach Anspruch 2, dadurch gekennzeichnet, daß das zweite Magnetometer (19) auch ein Signal KX liefert, wobei K ein Multiplikator größer als 1 ist, und das Signal dem Signal X gleicht, jedoch in seinem Veränderungsbereich zwischen den beiden Sättigungspegeln eine größere Steilheit besitzt.

4. Kompaß nach einem beliebigen der Ansprüche 2 und 3, dadurch gekennzeichnet, daß mindestens eines der Signale X und KX an eine Schwellendetektoreinrichtung (21) angelegt ist, die es mit zwei zwischen den Sättigungspegeln liegenden Spannungsschwellwerten vergleicht und logische Binärsignale liefert, welche ihren Zustand ändern, wenn diese Schwellwerte von den Signalen X oder KX überschritten werden, wobei die Größe der Schwellwerte so festgesetzt ist, daß sie einer bestimmten Fehlorientierung der so vom Kompaß angezeigten Richtung in Bezug auf die gewählte Größe entsprechen.

5. Kompaß nach Anspruch 4, dadurch gekennzeichnet, daß die logischen Binärsignale an eine logische Einheit (23) angelegt werden, die sie kombiniert und daraus Steuersignale für die Lumineszenzdioden (24 - 28) ableitet.

6. Kompaß nach Anspruch 5, dadurch gekennzeichnet, daß der Ring (2) einen in Form eines Pfeiles eingravierten Zeiger (31) aufweist, dessen Spitze die Skala der Rose (7) überstreicht, wobei eine erste Diode (26) an der Spitze des Pfeiles und eine zweite Diode (27) am Ende desselben befestigt ist und die erste und die zweite Diode gleichzeitig aufleuchten, wenn sich der Pfeil in der gewählten Richtung innerhalb eines ersten festgelegten Bereiches befindet, wobei eine dritte (24) und eine vierte Diode (29) am Ende des Pfeiles zu beiden Seiten der zweiten Diode befestigt sind und die dritte Diode und die vierte Diode aufleuchten, wenn der Pfeil eine Fehlorientierung außerhalb des ersten Bereiches, aber innerhalb eines festgesetzten zweiten Bereiches einnimmt, wobei die Richtung der Fehlorientierung durch das Aufleuchten jeweils nur einer dieser Dioden bestimmt ist, und wobei eine fünfte Diode (25) und eine sechste Diode (28) auf der Rose auf einem zum Pfeil senkrecht verlaufenden Durchmesser befestigt sind und die dritte, vierte, fünfte und sechste Diode aufleuchten, wenn die Fehlorientierung einen festgelegten Bereich überschreitet, wobei allein die beiden auf der gleichen Seite des Pfeils gelegenen Dioden gleichzeitig zur Richtungsanzeige der Fehlorientierung aufleuchten.

7. Kompaß nach Anspruch 6, dadurch gekennzeichnet, daß der erste Bereich plus oder minus 2° und der zweite Bereich plus oder minus 10° beträgt.

# FIG_1

EP 0 246 138 B1

FIG_2

FIG_3

# FIG_4